# EUROPÄISCHE PATENTANMELDUNG

(11) **EP 0 961 065 A1**
(43) Veröffentlichungstag der Anmeldung: **01.12.1999**
(21) Anmeldenummer: 97120902.8
(22) Anmeldetag: 28.11.1997
(51) Int. Cl.: F16K 37/00, E03B 7/07, F17D 5/06

(54) **Einrichtung zum Absperren einer Wasserleitung**

(71) Anmelder: MAITRON CHEMIEFREIE WASSERBEHANDLUNG G.M.B.H., 6020 Innsbruck (AT)
(72) Erfinder: Schwarting, Georg, 86152 Augsburg (DE)

(57) **Zusammenfassung**

Einrichtung zum Absperren einer Wasserleitung, insbesondere einer Hauptwasserleitung einer Wohnung oder eines Hauses, mit einem elektromagnetisch betätigbaren Schließventil und einer Steuereinrichtung, die in Abhängigkeit von Signalen aus mindestens einem Überwachungssensor das Schließventil steuert. Es ist eine Erfassungseinrichtung (13, 14, 17) zum Erfassen des Öffnungs- bzw. Schließzustandes des Schließventiles (2) und durch eine Aufzeichnungseinrichtung (19, 20) mit einem Speicher (20) zum Aufzeichnen der erfaßten Öffnungs- bzw. Schließzustände.

## Beschreibung

Die Erfindung betrifft eine Einrichtung zum Absperren einer Wasserleitung, insbesondere einer Hauptwasserleitung einer Wohnung oder eines Hauses, mit einem elektromagnetisch betätigbaren Schließventil und einer Steuereinrichtung, die in Abhängigkeit von Signalen aus mindestens einem Überwachungssensor das Schließventil steuert.

Derartige Einrichtungen sind bereits bekannt und dienen zum Schutz gegen Wasserschäden durch defekte Leitungen und/oder Geräte. Wenn ein Überwachungssensor, beispielsweise ein Feuchtesensor oder ein Flüssigkeitssensor anspricht, schaltet die Steuereinrichtung das Schließventil an der Hauptwasserleitung, also jener Leitung die von außen in das Haus oder in die Wohnung führt, ab. Damit - natürlich nach Behebung des lokalen Wasserschadens - noch vor Eintreffen der Versicherung bzw. des Hausbesorgers eine Wasserversorgung möglich ist, kann parallel zum Schließventil in einer Bypass-Leitung ein Handventil angeordnet sein, das bei geschlossenem Schließventil händisch öffenbar ist. Es ist aber auch möglich, daß der Benutzer die Möglichkeit hat, das elektromagnetisch betätigbare Schließventil trotz Ansprechens von Überwachungssensoren von der Steuereinrichtung aus zu öffnen.

Um Mißbräuchen vorzubeugen und vor allem für Versicherungen eine Überprüfungsmöglichkeit zu haben, sieht die Erfindung eine Einrichtung zum Absperren einer Wasserleitung der eingangs genannten Gattung vor, die gekennzeichnet ist durch eine Erfassungseinrichtung zum Erfassen des Öffnungs- bzw. Schließzustandes des Schließventiles und durch eine Aufzeichnungseinrichtung mit einem Speicher zum Aufzeichnen der erfaßten Öffnungs- bzw. Schließzustände.

Wenn ein Handventil in einer Bypass-Leitung zum Schließventil auch dessen Öffungs- bzw. Schließzustände erfaßt und die Aufzeichnungseinrichtung diese Öffnungs- und Schließzustände aufzeichnet.

Die Erfassungseinrichtung kann jeweils am Ventil angeordnete Sensoren aufweisen, beispielsweise einfache mechanische Schalter, Lichtschranken, induktive Sensoren, etc. Es ist aber vor allem beim elektromagnetisch betätigbaren Schließventil auch möglich, dessen Schließzustand indirekt zu erfassen und zwar aus dem Wert des Stromes im Elektromagneten. Sicherer ist aber eine direkte Erfassung des tatsächlichen Öffnungs- bzw. Schließzustandes am Ventil selbst.

Die Aufzeichnungseinrichtung weist vorzugsweise einen nichtflüchtigen elektronischen Speicher, beispielsweise ein EEPROM, auf Grundsätzlich sind jedoch natürlich auch andere Speicher, wie beispielsweise magnetische oder optische Planen oder Drucker, durchaus denkbar und möglich. Als Überwachungssensoren kommen insbesondere Feuchtesensoren bzw. Flüssigkeitssensoren in Frage. Es sind aber auch andere Sensoren denkbar, beispielsweise solche, die den mechanischen Bruch einer Leitung oder das Abziehen eines Schlauches von einer Halterung erfassen und dann über die Steuereinrichtung das Schließventil in der Hauptwasserleitung schließen.

Eine Variante der Erfindung ist dadurch gekennzeichnet, daß bei jedem Überwachungssensor eine Sendeeinheit angeordnet ist, die vorzugsweise über eine Steckdose an das normale Wechselstromnetz der Wohnung bzw. des Hauses anschließbar ist und die über die vorhandenen Leitungen dieses Wechselstromnetzes Überwachungssensor-Daten an die Steuereinrichtung sendet, welche ebenfalls vorzugsweise über eine Steckdose an das Wechselstromnetz anschließbar ist und eine Empfangseinheit zum Empfang der Überwachungssensor-Daten aufweist.

Die Übertragung von Signalen, insbesondere Schallsignalen, über das normale Wechselstromnetz ist bereits an sich bekannt, beispielsweise zur Überwachung schlafender Kinder mittels eines sogenannte 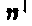 Baby-Phones". Nunmehr besteht die Idee darin, Überwachungssensor-Daten über das normale Wechselstromnetz zu transportieren. Dies hat den Vorteil, daß die Anlage einfach nachrüstbar ist, weil keine Stemmarbeiten oder nachträglichen Überputz-Verlegungen von Leitungen nötig sind. Es können vielmehr auf einfache Weise auch mehrere Überwachungssensoren angeschlossen werden und ihre Daten über das normale Stromnetz an die Steuereinheit übermitteln, die eine entsprechende Empfangseinheit aufweist und üblicherweise im Keller des Hauses angeordnet sein wird.

Die Fig. 1 zeigt die Ventileinrichtung einer erfindungsgemäßen Einrichtung zum Absperren einer Wasserleitung,
die Fig. 2 zeigt ein schematisches Blockdiagramm eines Ausführungsbeispieles einer erfindungsgemäßen Einrichtung, wobei das Schließventil und das Handventil selbst (wie es in Fig. 1 dargestellt ist) der Übersichtlichkeit halber nicht näher dargestellt ist.

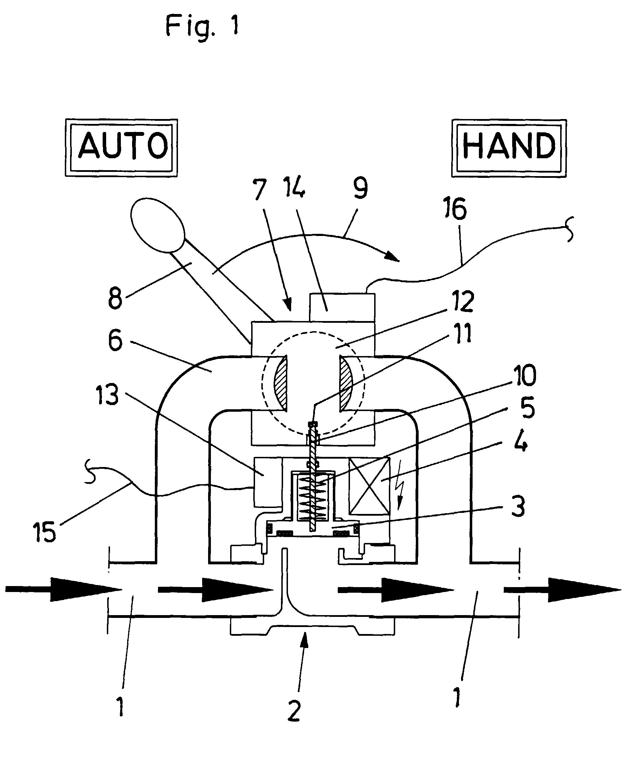

Die in Fig. 1 dargestellte Ventileinrichtung ist in einer Hauptwasserleitung 1 einer Wohnung oder eines Hauses angeordnet und weist ein elektromagnetisch betätigbares Schließventil 2 auf. Der in der Zeichnung vertikal auf und ab bewegbare Ventilkörper 3 wird von einem Elektromagneten 4 und einer Feder 5 beaufschlagt, wobei das Ventil 2 in stromlosem Zustand über die Feder 5 geschlossen ist und bei bestromtem Elektromagneten 4 geöffnet ist, wie es in Fig. 1 dargestellt ist. Um das Schließventil 2 herum führt eine Bypass-Leitung 6, in der ein über einen Handhebel 8 betätigbares Handventil 7 angeordnet ist. Die Fig. 1 zeigt den normalen Betriebszustand, das Schließventil 2 ist geöffnet, das Handventil 7 ist geschlossen, d. h. der Handhebel 8 befindet sich in der Stellung 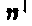 Auto". Im Störfall spricht ein später beschriebener Überwachungssensor an und die Steuereinrichtung macht den Elektromagneten 4 stromlos, worauf die Feder 5 den Ventilkörper 3 auf den darunter liegenden Ventilsitz preßt und das Schließventil 2 schließt. Die Wasserzufuhr zum Haushalt ist damit unterbrochen.

Um nach Behebung des lokalen Schadens dennoch eine Wasserversorgung zu ermöglichen, kann der Handhebel 8 in Richtung des Pfeiles 9 in die Stellung 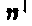 Hand" verschwenkt werden und damit das Handventil 7 geöffnet werden. Dies ist erst möglich, nachdem das Schließventil 2 geschlossen hat, davor verhindert ein Stift 10, der mit dem Ventilkörper 3 verbunden ist, ein Verdrehen des Handhebels 8, weil der Stift 10 in eine Nut 11 des Ventilkörpers 12 eingreift. Bei geschlossenem Schließventil 2 geht dieser Stift 10 nach unten und rastet aus der Nut aus.

Erfindungsgemäß ist eine Erfassungseinrichtung zum Erfassen des Öffnungs- bzw. Schließzustandes des Schließventiles und vorteilhaft auch des Handventiles 7 vorgesehen. Beim gezeigten Ausführungsbeispiel weist diese Erfassungseinrichtung einen am Schließventil 2 angeordneten Sensor 13 und einen am Handventil angeordneten Sensor 14 auf, der in Abhängigkeit vom jeweiligen Öffnungs- bzw. Schließzustand oder beim Wechsel dieser Zustände ein elektrisches Signal auf einer Leitung 15 bzw. 16 an die in der Folge beschriebene Steuereinrichtung abgibt. Diese Sensoren können beispielsweise einfache mechanische Schalter, Lichtschranken, induktive Sensoren, etc. sein.

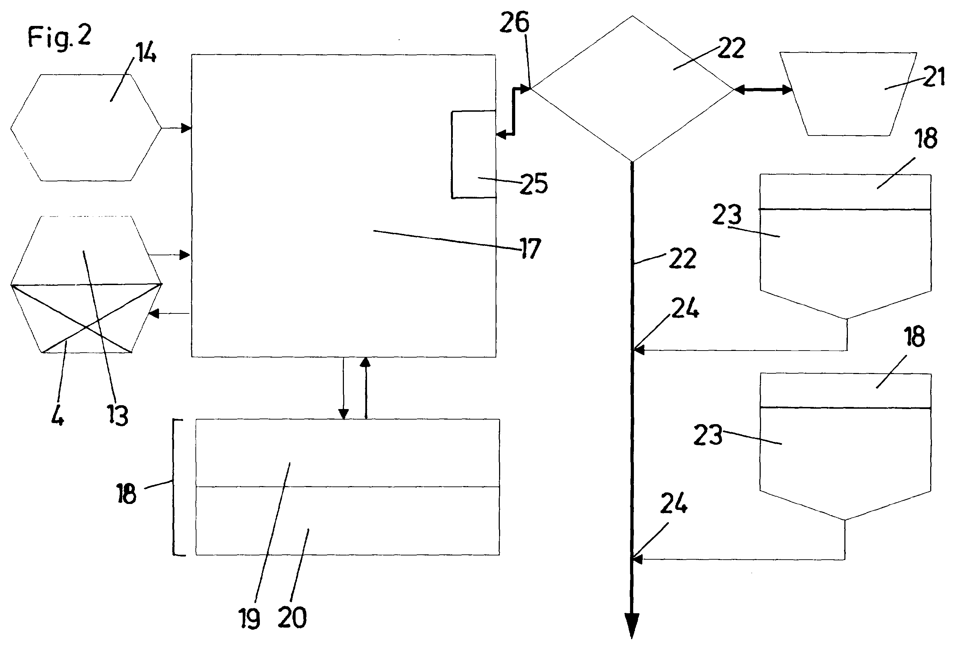

Die Sensoren 13 und 14 sowie der Elektromagnet 4 des Schließventiles sind auch in der Fig. 2, dem elektrischen Blockschaltbild einer erfindungsgemäßen Einrichtung, dargestellt. Die Sensoren 13 und 14 geben Signale an eine Steuereinrichtung 17 ab, die beispielsweise in einem Geräteschrank im Keller untergebracht ist. Die Steuereinrichtung 17 hat im wesentlichen zwei Aufgaben. Die erste Aufgabe ist an sich bereits bekannt: Die Steuereinrichtung 17 schaltet nämlich in Abhängigkeit von den Signalen aus den Überwachungssensoren 18, die im Haushalt an geeigneten Stellen angeordnet sind (beispielsweise Feuchtesensoren oder Flüssigkeitssensoren), den Elektromagneten 4 stromlos, womit das Schließventil 2 der Fig. 1 schließt.

Neu ist die Funktionalität der Erfassung des Öffnungs- bzw. Schließzustandes des Schließventiles 2 über den Sensor 13 und des Handventiles 7 über den Sensor 14 und die Aufzeichnung dieser Daten in einer Aufzeichnungseinrichtung 18, die diese Daten nach Aufbereitung durch die Steuereinrichtung 17 erhält. Es ist natürlich auch möglich, daß die Aufzeichnungseinrichtung 18 in der Steuereinrichtung 17 integriert ist. In der dargestellten Version der Fig. 2 bereitet die Steuereinrichtung 17 die Signale der Sensoren 13 und 14 auf und gibt sie in aufbereitetem Zustand an die Aufzeichnungseinrichtung 18 weiter. Diese Aufzeichnungseinrichtung 18 hat eine Zeitbasis 19 und einen Speicher 20, beispielsweise ein EEPROM. Damit ist es möglich, den zeitlichen Verlauf der Öffnungs- und Schließzustände der beiden Ventile 2 und 7 über die Sensoren 13 und 14 im Speicher 20 aufzuzeichnen. Beispielsweise ist es möglich, die Zeitpunkte des Umschaltens vom Öffnungszustand in den Schließzustand bzw. umgekehrt aufzuzeichnen. Von Berechtigten, beispielsweise einem Hausbesorger oder einem Vertreter der Versicherung, können die Daten im Speicher 20 einerseits über eine Anzeigevorrichtung oder über eine noch zu beschreibende Datenfernübertragung 21 ausgelesen und danach gelöscht werden. Über die Aufzeichnung der Öffnungs- und Schließzustände der Ventile 2 und 7 lassen sich nicht nur versicherungstechnisch relevante Faktoren ableiten, es kann auch das Funktionieren des gesamten Anlage aus technischer Sicht damit überprüft werden.

Zur Kommunikation der Steuereinrichtung 17 mit den Überwachungssensoren 18 wird gemäß einer bevorzugten Variante der Erfindung das normale Wechselstromnetz 22 des Haushalts verwendet. Dazu ist jedem Überwachungssensor 18 eine Sendeeinheit 23 nachgeschaltet (beispielsweise ein sogenanntes 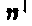 Power-Line-Modem"). Die gesamte Einheit 18, 23 kann dann über eine normale Steckdose 24 an das Wechselstromnetz angeschlossen sein. Die Steuereinrichtung 17 weist eine entsprechende Empfangseinheit 25 auf, die ebenfalls über eine normale Steckdose mit dem Wechselstromnetz verbunden sein kann. Ebenfalls über eine Steckdosenverbindung kann ein 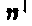 Power-Line-Modem" zur Datenfernübertragung 21 vorgesehen sein. Diese kann beispielsweise über das Telefon, Datex-P, Internet, etc. erfolgen. Diese Datenfernübertragung ermöglicht die zentrale Wartung und Überwachung von erfindungsgemäßen Einrichtungen zum Absperren einer Wasserleitung.

## Patentansprüche

1. Einrichtung zum Absperren einer Wasserleitung, insbesondere einer Hauptwasserleitung einer Wohnung oder eines Hauses, mit einem elektromagnetisch betätigbaren Schließventil und einer Steuereinrichtung, die in Abhängigkeit von Signalen aus mindestens einem Überwachungssensor das Schließventil steuert, gekennzeichnet durch eine Erfassungseinrichtung (13, 14, 17) zum Erfassen des Öffnungs- bzw. Schließzustandes des Schließventiles (2) und durch eine Aufzeichnungseinrichtung (19, 20) mit einem Speicher (20) zum Aufzeichnen der erfaßten Öffnungs- bzw. Schließzustände.

2. Einrichtung nach Anspruch 1, dadurch gekennzeichnet, daß das Schließventil von einer Bypass-Leitung (6) umgeben ist, in der ein Handventil (7) angeordnet ist, wobei die Erfassungseinrichtung (13, 14, 17) auch dessen Öffnungs- bzw. Schließzustand erfaßt und die Aufzeichnungseinrichtung (19, 20) diese Öffnungs- und Schließzustände aufzeichnet.

3. Einrichtung nach Anspruch 1 oder Anspruch 2, dadurch gekennzeichnet, daß die Erfassungseinrichtung zumindest einen am Schließventil (2) angeordneten Sensor (13) aufweist, der in Abhängigkeit vom jeweiligen Öffnungs- bzw. Schließzustand oder beim Wechsel dieser Zustände ein elektrisches Signal abgibt.

4. Einrichtung nach Anspruch 2 oder 3, dadurch gekennzeichnet, daß die Erfassungseinrichtung zumindest einen am Handventil (7) angeordneten Sensor (14) aufweist, der in Abhängigkeit vom jeweiligen Öffnungs- bzw. Schließzustand oder beim Wechsel dieser Zustände ein elektrisches Signal abgibt.

5. Einrichtung nach einem der Ansprüche 1 bis 4, dadurch gekennzeichnet, daß der Speicher (20) der Aufzeichnungseinrichtung ein nichtflüchtiger elektronischer Speicher, vorzugsweise ein EEPROM, ist.

6. Einrichtung zum Absperren einer Wasserleitung, insbesondere einer Haupt wasserleitung einer Wohnung oder eines Hauses, mit einem elektromagnetisch betätigbaren Schließventil und einer Steuereinrichtung, die in Abhängigkeit von Signalen aus mindestens einem Überwachungssensor das Schließventil steuert, insbesondere nach einem der eine Erfassungseinrichtung zum Erfassen des Öffnungs- bzw. Schließzustandes des Schließventiles und durch eine Aufzeichnungseinrichtung mit einem Speicher zum Aufzeichnen der erfaßten Öffnungs- bzw. Schließzustände, insbesondere nach einem der Ansprüche 1 bis 5, dadurch gekennzeichnet, daß bei jedem Überwachungssensor (18) eine Sendeeinheit (23) angeordnet ist, die vorzugsweise über eine Steckdose (24) an das normale Wechselstromnetz (22) der Wohnung bzw. des Hauses anschließbar ist und die über die vorhandenen Leitungen dieses Wechselstromnetzes (22) Überwachungssensor-Daten an die Steuereinrichtung (17) sendet, welche ebenfalls vorzugsweise über eine Steckdose (26) an das Wechselstromnetz (22) anschließbar ist und eine Empfangseinheit (25) zum Empfang der Überwachungssensor-Daten aufweist.
